# EUROPÄISCHE PATENTANMELDUNG

(11) **EP 0 744 721 A2**
(43) Veröffentlichungstag der Anmeldung: **27.11.1996**
(21) Anmeldenummer: 96107939.9
(22) Anmeldetag: 17.05.1996
(51) Int. Cl.: G07G 1/00, G07F 7/02

(54) **System zur Erfassen der Daten von Artikeln**

(30) Priorität: 24.05.1995 DE 29508706 U
(71) Anmelder: SIEMENS AKTIENGESELLSCHAFT, 80333 München (DE)
(72) Erfinder: Leichsenring, Ralf, 61194 Niddatal (DE); März, Michael, 67808 Steinbach (DE)

(57) **Zusammenfassung**

Ein System zum Erfassen der Daten von Artikeln besteht aus einer Zentralen (ZE), einer oder mehreren Unterstationen (US), die über ein Übertragungsnetz (WAN) mit der Zentralen (ZE) verbunden sind, und je Unterstation (US) aus einem oder mehreren tragbaren Codelesern (CL). Mit diesen werden die Daten der einzelnen Artikel durch Abtasten eines Codes erfaßt und gespeichert. Werden sie mit der ihnen zugeordneten Unterstation (US) verbunden, werden die Daten in diese übernommen und je nach Vorgabe entweder sofort oder zu einem bestimmten Termin zur Zentralen (ZE) übertragen, wo sie ausgewertet werden.

Die Erfindung wird angewandt zur Aufnahme des Artikelbestandes in Außenlagern.

## Beschreibung

Die Erfindung betrifft ein System zum Erfassen von Daten von mit Codes versehenen Artikeln.

In Handels- und auch anderen Betrieben muß der Warenbestand, eventuell mit Zusatzinformationen wie Alter der Waren, Lieferant, regelmäßig erfaßt werden, und zwar auch dann, wenn die Waren in Filialen oder Auslieferungslager weit verzweigt gelagert sind. Der vorliegenden Erfindung liegt die Aufgabe zugrunde, ein System zu schaffen, mit dem die Daten von Artikeln, die an räumlich auseinanderliegenden Stellen untergebracht sind, bei einfacher und sicherer Bedienung erfaßt werden können.

Erfindungsgemäß wird diese Aufgabe mit den im Anspruch 1 angegebenen Maßnahmen gelöst.

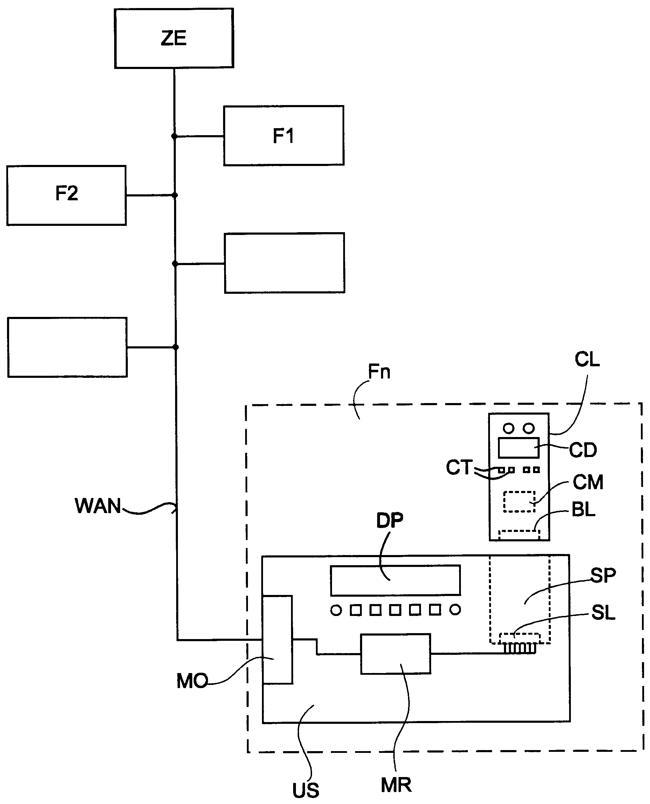

Anhand der Zeichnung, in der ein Ausführungsbeispiel der Erfindung schematisch dargestellt ist, werden im folgenden die Erfindung sowie Weiterbildungen und Ergänzungen näher beschrieben und erläutert.

Eine Zentrale ZE ist über ein Übertragungsnetz WAN, das ein öffentliches Fernsprech- oder Datennetz sein kann, mit mehreren Filialen F1, F2 ... Fn verbunden, die, soweit die vorliegende Erfindung betroffen ist, gleichartig aufgebaut sind und von denen daher nur eine, die Filiale Fn, ausführlicher dargestellt ist. Sie enthalten jeweils eine Unterstation US mit einem Modem MO, welches die Verbindung mit dem Netz und damit mit der Zentralen herstellt. Die Unterstation US weist einen Steckplatz SP oder eine andere Anschlußmöglichkeit für einen oder mehrere tragbare akkumulatorbetriebene Codeleser CL auf. Mit jedem von ihnen können Codes, die auf Artikeln angebracht sind, die in der Filiale gelagert sind, gelesen und als Daten in einem Speicher CM gespeichert werden. Die Codeleser können jeweils einen Lautsprecher enthalten, mit dem auf Fehler beim Codelesen, auf den Überlauf des Speichers, auf Entladung des Akkumulators und dergleichen aufmerksam gemacht werden kann. Ein Bedienfeld enthält ein Display CD zur Anzeige, z. B. von Artikeldaten im Klartext, ferner enthält es Bedientasten CT und Kontrolleuchten. An der Unterseite ist eine Buchsenleiste BL angebracht, die, wenn der Codeleser in den Steckplatz SP der Unterstation US gesteckt ist, in eine Steckerleiste SL eingreift, so daß eine elektrische Verbindung zwischen Codeleser CL und Unterstation US besteht. Selbstverständlich kann die elektrische Verbindung auch in anderer Weise, z. B. mittels Kabel, hergestellt werden. Auch auf den Unterstationen können Bedienfelder angebracht sein mit je einem Display DP, mit Kontrolleuchten, Tasten und dergleichen. Auch kann ein Drucker vorhanden sein.

Ist der Codeleser CL mit der Unterstation US verbunden, werden automatisch die erfaßten Artikeldaten zusammen mit einer Kennummer des Codelesers in einen Speicher MR der Unterstation US übernommen. Es kann dann später festgestellt werden, welche Artikeldaten mit welchem Codeleser erfaßt wurden. Anschließend wird der Speicher CM des Codelesers gelöscht, so daß der Codeleser für weitere Datenerfassungen betriebsbereit ist und etwaige neue Aufträge von der Unterstation entgegengenommen werden können. Die Unterstation kann anhand der zuvor eingelesenen Kennummer feststellen, welcher Codeleser mit ihr verbunden ist. Neue Aufträge können daher gezielt jeweils an einen bestimmten Codeleser gegeben werden. Mit einem in der Unterstation oder im Codeleser enthaltenen Drucker können Anweisungen an die Bedienungsperson gegeben werden. Solange der Codeleser im Steckplatz SP sitzt, ist sein Akkumulator mit einem Ladegerät verbunden.

Die in den Speicher MR der Unterstation US übernommenen Daten werden in die Zentrale ZE übertragen und dort ausgewertet. In der Unterstation US kann eingestellt werden, ob die Daten sofort oder zu einer bestimmten Zeit übertragen werden sollen. Auch können sie unabhängig davon von der Zentralen ZE abgerufen werden.

Auch die Unterstationen US enthalten jeweils eine Kennummer, die zusammen mit den Daten zur Zentralen ZE übertragen wird, so daß dort festgestellt werden kann, in welcher Filiale die Artikel mit den übertragenen Daten vorhanden sind und, falls auch die Kennummern der Codeleser mit übertragen werden, mit welchem Codeleser sie aufgenommen wurden.

Auch können von der Zentralen ZE Aufträge und andere Informationen zu den Unterstationen US und von dort zu den verbundenen Codelesern CL übertragen werden, und zwar aufgrund der Kennummern gezielt jeweils zu einer bestimmten Unterstation und einem bestimmten Codeleser. So können z. B. die Unterstationen aufgefordert werden, die Daten bestimmter Artikel zu erfassen und zu übertragen. Schon beim Abtasten der Artikelcodes kann festgestellt werden, z. B. mit einem Ton aus dem Lautsprecher des Codelesers, ob es sich um einen gesuchten Artikel handelt.

## Patentansprüche

1. System zum Erfassen der Daten von mit Codes versehenen Artikeln, **gekennzeichnet durch**
- mindestens einen tragbaren Codeleser (CL), mit dem die Artikelcodes lesbar und in dem die gelesenen Codes als Artikeldaten gespeichert sind,
- mindestens eine Unterstation (US), an die der Codeleser (CL) anschließbar ist und die so ausgebildet ist, daß sie nach Anschluß des Codelesers die in diesem gespeicherten Daten übernimmt und speichert, und die ein Modem (MO) enthält, über welches sie an ein Übertragungsnetz (WAN) angeschlossen ist,
- eine Zentrale (ZE), die an das Übertragungsnetz (WAN) angeschlossen ist und zu der von dem Modem (MO) der Unterstation (US) die von dem Codeleser (CL) übernommenen und gespeicherten Artikeldaten übertragen und in der die Artikeldaten ausgewertet werden.

2. System nach Anspruch 1, **dadurch gekennzeichnet,** daß der Codeleser (CL) ein Barcodeleser ist.

3. System nach Anspruch 1 oder 2, **dadurch gekennzeichnet,** daß der Codeleser (CL) und die Unterstation (US) so ausgebildet sind, daß nach Übernahme der Daten in die Unterstation (US) die im Codeleser gespeicherten Daten gelöscht werden.

4. System nach Anspruch 3, **dadurch gekennzeichnet,** daß der Codeleser (CL) und die Unterstation (US) so ausgebildet sind, daß nach dem Löschen der im Codeleser (CL) gespeicherten Daten neue Aufträge von der Unterstation (US) an den Codeleser gegeben werden.

5. System nach einem der Ansprüche 1 bis 4, **dadurch gekennzeichnet,** daß in jedem Codeleser (CL) eine Codeleser-Kennummer gespeichert ist, die zusammen mit den Daten an die Unterstation (US) übergeben wird.

6. System nach einem der Ansprüche 1 bis 5, **dadurch gekennzeichnet,** daß in jeder Unterstation (US) eine Unterstation-Kennummer enthalten ist, die zusammen mit den Daten zur Zentrale (ZE) übertragen wird.

7. System nach Anspruch 5 oder 6, **dadurch gekennzeichnet,** daß die Unterstation (US) so ausgebildet ist, daß sie zur Zentralen (ZE) zusammen mit den Artikeldaten die Kennummer des Codelesers (CL) überträgt, mit dem die Artikeldaten aufgenommen wurden.
